(19) **Europäisches Patentamt**
**European Patent Office**
**Office européen des brevets**

(11) **EP 3 508 640 B1**

(12) **EUROPEAN PATENT SPECIFICATION**

(45) Date of publication and mention
of the grant of the patent:
**23.10.2024 Bulletin 2024/43**

(21) Application number: **17846329.5**

(22) Date of filing: **25.08.2017**

(51) International Patent Classification (IPC):
*D04H 3/147* (2012.01)    *B01D 69/10* (2006.01)
*D04H 3/011* (2012.01)

(52) Cooperative Patent Classification (CPC):
**B01D 69/10; B01D 67/00042; B01D 69/105;**
**B01D 69/1071; B01D 69/1213; B01D 71/48;**
**D04H 3/011; D04H 3/016; D04H 3/147**

(86) International application number:
**PCT/JP2017/030512**

(87) International publication number:
**WO 2018/043324 (08.03.2018 Gazette 2018/10)**

(54) **SPUNBONDED NONWOVEN FABRIC AND PRODUCTION METHOD THEREFOR**

**SPINNVLIESSTOFF UND HERSTELLUNGSVERFAHREN DAFÜR**

**NON-TISSÉ FILÉ-LIÉ, ET PROCÉDÉ DE FABRICATION DE CELUI-CI**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.09.2016 JP 2016171659**

(43) Date of publication of application:
**10.07.2019 Bulletin 2019/28**

(73) Proprietor: **Toray Industries, Inc.**
**Tokyo 103-8666 (JP)**

(72) Inventors:
• **SHIMADA, Daiki**
**Otsu-shi**
**Shiga 520-8558 (JP)**
• **IKEJIRI, Yuki**
**Otsu-shi**
**Shiga 520-8558 (JP)**
• **NAKANO, Yohei**
**Otsu-shi**
**Shiga 520-8558 (JP)**

(74) Representative: **Mewburn Ellis LLP**
**Aurora Building**
**Counterslip**
**Bristol BS1 6BX (GB)**

(56) References cited:
**EP-A1- 2 174 703      EP-A1- 2 818 229**
**EP-A1- 3 051 014      WO-A1-2009/017086**
**WO-A1-2015/046215      JP-A- 2011 005 455**
**JP-A- 2011 005 455      JP-A- 2013 071 106**
**US-A- 5 498 468**

**Description**

The present invention relates to a spunbonded nonwoven fabric having a smooth surface and being particularly excellent in membrane formability and a production method for the spunbonded nonwoven fabric.

BACKGROUND ART

Membrane technology has been actively applied to impart various functions to nonwoven fabrics, including water treatment in recent years. For example, microfiltration membranes and ultrafiltration membranes are used in water purification plants, and reverse osmosis membranes are used for saline water conversion. Reverse osmosis membranes and nanofiltration membranes are used for the treatment of water for manufacturing semiconductors, water for boilers, water for medical use, pure water for laboratories, and the like. For the treatment of sewage water and waste water, microfiltration membranes and ultrafiltration membranes are used to perform a membrane separation activated sludge method. In air filter applications, filtration membranes having a dense structure, such as PTFE membranes, are used.

The separation membranes in water treatment are roughly classified into flat membranes and hollow fiber membranes in terms of the membrane shape. A flat membrane, which is mainly formed of a synthetic polymer and has a separation function, is inferior in mechanical strength when used alone and, therefore, is typically integrated with a support such as a nonwoven fabric and a woven fabric.

These separation membranes are typically formed by a method of casting and fixing a resin solution as a stock solution of the membrane onto a support such as a nonwoven fabric and a woven fabric. For semipermeable membranes such as reverse osmosis membranes, there has been used a method of casting a resin solution onto a support such as a nonwoven fabric or a woven fabric to form a support layer and then forming a semipermeable membrane on the support layer. The nonwoven fabric, the woven fabric, or the like used as the support is thus required to have a superior membrane formability sufficient to prevent excessive permeation and resulting a bleed-through of the cast resin solution, peel-off of the membrane substance, and any other defect such as nonuniform membrane or pin hole due to, for example, fluffing of the support.

Further, regarding composite reverse osmosis membranes used for desalination of seawater or the like, seawater desalination apparatus having the composite reverse osmosis membrane integrated thereinto may be operated at a constant operating pressure on a continuous basis or under pressure varied in response to changes in the quality or temperature of seawater supplied or to the variation in the target value of water to be generated. The latter operation is common in practice, and the variation in the operating pressure applied to the composite reverse osmosis membrane in the thickness direction can cause the composite reverse osmosis membrane to repeatedly expand and shrink in the membrane thickness direction. In such applications, the separation membrane support is required to have high mechanical strength and high dimensional stability, and in order to prevent a support membrane of the composite reverse osmosis membrane from being detached from the support during operation, the separation membrane support is required to have high peeling strength when a separation membrane is formed.

As a conventional separation membrane support, for example, there has been proposed a separation membrane support formed of a nonwoven fabric having excellent mechanical strength sufficient to prevent deformation or breakage caused by pressure or other forces applied when used as a separation membrane or a fluid separation element (see Patent Document 1). Separately, there has been proposed a separation membrane support which includes a high density portion formed by partial thermocompression bonding and a low density portion not partially thermocompression bonded and thus has high bonding strength with a membrane (see Patent Document 2). In addition, separately, there has been proposed a nonwoven fabric for surface protection which uses thermoplastic synthetic fibers having an average fineness of 5 dtex or less and having a flattened cross-sectional shape and has a basis weight of 10 to 50 g/m$^2$ (see Patent Document 3). Patent Document 4 describes a support for a separation membrane comprising a long-fiber nonwoven fabric composed of thermoplastic continuous filaments. Patent Document 5 describes a separation membrane support comprising a nonwoven fabric. Patent Document 6 describes a nonwoven fabric, which has two surfaces having a difference in smoothness therebetween of 10 seconds to 50 seconds, and has a boiling water curling height after treating in boiling water for 5 minutes of from 0 mm to 8.0 mm. Patent Document 7 describes a method of making a flexible fabric composed of a fibrous matrix of ribbon-like, conjugate, spun filaments.

PRIOR ART DOCUMENTS

Patent Document 1: JP No. 2013-71106; Patent Document 2: JP No. 2011-05455; Patent Document 3: JP No. 2004-50274; Patent Document 4: EP 2174703A; Patent Document 5: EP 2818229A; Patent Document 6: EP 3051014A; Patent Document 7: US 5498468A.

PROBLEMS TO BE SOLVED BY THE INVENTION

However, according to the proposal of Patent Document 1, since thermocompression bonding is performed on the entire surface using a pair of upper and lower flat rolls, the entire surface of the sheet is extremely densified. In a case where the viscosity of a resin solution serving as a membrane formation stock solution is high, and particularly at a portion where the basis weight of the nonwoven fabric is partially high, there is a problem that peel-off of the membrane tends to occur.

Further, according to the proposal of Patent Document 2, excessive permeation of a resin solution serving as a membrane formation stock solution tends to occur at a low density portion, and particularly when the viscosity of the resin solution is high or when a membrane formation method in which a pushing pressure of the resin solution is high is used, there is a problem that a bleed-through of the solution occurs and membrane defects occur at the time of winding up.

Furthermore, according to the proposal of Patent Document 3, when the nonwoven fabric is used as a separation membrane support, there is a problem that membrane defects due to a bleed-through of a resin solution serving as a membrane formation stock solution occur and it is difficult to use as a separation membrane support.

Thus, an object of the present invention is to provide a spunbonded nonwoven fabric which has a superior membrane formability of not allowing, at the time of casting of a resin solution serving as a membrane formation stock solution, a bleed-through of the resin solution due to excessive permeation, a peel-off of a membrane substance, or any other defect such as nonuniform membrane or pin hole due to fluffing of the support, and further exhibits membrane bondability that is strong enough to prevent the membrane substance from peeling off after membrane formation.

Another object of the present invention is to provide a production method for a spunbonded nonwoven fabric in which a spunbonded nonwoven fabric having the above characteristics can be stably produced with an excellent spinning property.

SOLUTIONS TO THE PROBLEMS

A spunbonded nonwoven fabric of the present invention is a spunbonded nonwoven fabric composed of thermoplastic fibers. The thermoplastic fiber is a conjugate fiber in which a low-melting polymer having a melting point lower by 10 to 140°C than that of a high-melting polymer is provided around the high-melting polymer, the spunbonded nonwoven fabric has a non-pressure bonding portion such that a portion of fibers on at least one surface of the fabric are not thermally fused, the non-pressure bonding portion having an apparent density of 0.20 to 0.60 g/cm$^3$, wherein the apparent density of the non-pressure bonding portion is calculated from the following equation:

Apparent density (g/cm$^3$) of non-pressure bonding portion = [basis weight of the nonwoven fabric (g/m$^2$)]/[thickness of the nonwoven fabric (mm)] $\times$ 10$^{-3}$,

wherein the basis weight and thickness of the nonwoven fabric are measured as described in the specification; and wherein when a long axis length of a fiber cross section of the non-pressure bonding portion is a and a short axis length thereof is b, a fiber flatness a/b is 1.5 to 5, and an air permeability satisfies the following [formula 1].

[Air permeability (cc/cm$^2$•sec)] $\leq$ 520 $\times$ exp(-0.0236 $\times$ [basis weight (g/m$^2$) - 2.85 $\times$ [apparent density (g/cm$^3$)])

and wherein the air permeability is measured as described in the specification. The spunbonded nonwoven fabric is produced by a production method comprising the following steps (a) to (c) sequentially in this order:

(a) spinning, from a spinneret having a rectangular discharge orifice having an aspect ratio (long side length/short side length) of 1.6 to 8, a conjugate fiber in which a low-melting polymer having a melting point lower by 10 to 140°C than that of a high-melting polymer is provided around the high-melting polymer;

(b) stretching the spun conjugate fibers by suction flow using a high-speed suction gas and collecting the fibers on a moving net conveyor to form the collected fibers into a nonwoven web; and

(c) partially thermally bonding the obtained nonwoven web at a temperature lower by 5 to 80°C than the melting point of the low-melting polymer.

According to a preferred embodiment of the spunbonded nonwoven fabric of the present invention, a compression bonding ratio of the spunbonded nonwoven fabric is 5 to 40%.

According to a preferred embodiment of the spunbonded nonwoven fabric of the present invention, the basis weight of the spunbonded nonwoven fabric is 10 to 150 g/m$^2$.

According to a preferred embodiment of the spunbonded nonwoven fabric of the present invention, a single fiber fineness of the thermoplastic fiber is 0.5 to 3 dtex.

According to a preferred embodiment of the spunbonded nonwoven fabric of the present invention, the thermoplastic fiber is a polyester fiber.

In the present invention, a separation membrane support can be formed by using the spunbonded nonwoven fabric.

A production method for a spunbonded nonwoven fabric of the present invention is a production method for a spunbonded nonwoven fabric characterized in that the following steps (a) to (c) are sequentially performed:

(a) spinning, from a spinneret having a rectangular discharge orifice having an aspect ratio (long side length/short side length) of 1.6 to 8, a conjugate fiber in which a low-melting polymer having a melting point lower by 10 to 140°C than that of a high-melting polymer is provided around the high-melting polymer,
(b) stretching the spun conjugate fibers by suction flow using a high-speed suction gas and collecting the fibers on a moving net conveyor to form the collected fibers into a nonwoven web, and
(c) partially thermally bonding the obtained nonwoven web at a temperature lower by 5 to 80°C than the melting point of the low-melting polymer.

According to a preferred embodiment of the production method for a spunbonded nonwoven fabric of the present invention, the conjugate fiber in the step (a) is a polyester fiber.

EFFECTS OF THE INVENTION

The present invention can provide a spunbonded nonwoven fabric which has a superior membrane formability of not allowing, at the time of casting of a resin solution, a bleed-through of the resin solution due to excessive permeation, a peel-off of a membrane substance, or any other defect such as nonuniform membrane or pin hole due to fluffing of the support, and further exhibits membrane bondability that is strong enough to prevent the membrane substance from peeling off after membrane formation.

Further, the present invention can provide a spunbonded nonwoven fabric which has a smooth surface and is excellent in bonded processability and bondability when a resin layer or a functional membrane is attached to the surface of the spunbonded nonwoven fabric.

In addition, according to the production method for a spunbonded nonwoven fabric of the present invention, a spunbonded nonwoven fabric having the above characteristics can be stably produced with an excellent spinning property.

EMBODIMENTS OF THE INVENTION

A spunbonded nonwoven fabric of the present invention is a spunbonded nonwoven fabric composed of thermoplastic fibers. In this spunbonded nonwoven fabric, the thermoplastic fiber is a conjugate fiber in which a low-melting polymer having a melting point lower by 10 to 140°C than that of a high-melting polymer is provided around the high-melting polymer, the spunbonded nonwoven fabric has a non-pressure bonding portion such that a portion of fibers on at least one surface of the fabric are not thermally fused, the non-pressure bonding portion having an apparent density of 0.20 to 0.60 $g/cm^3$, wherein the apparent density of the non-pressure bonding portion is calculated from the following equation:

apparent density ($g/cm_3$) of non-pressure bonding portion = [basis weight of the nonwoven fabric ($g/m_2$)]/[thickness of the nonwoven fabric (mm)] $\times 10_{-3}$,

wherein the basis weight and thickness of the nonwoven fabric are measured as described in the specification; and wherein when a length of a long axis of a fiber cross section of the non-pressure bonding portion is a and a length of a short axis thereof is b, a fiber flatness a/b is 1.5 to 5, and an air permeability satisfies the following [formula 1]:

[air permeability ($cc/cm^2 \cdot sec$)] $\leq 520 \times$ exp (-0.0236 $\times$ [basis weight ($g/m^2$)] - 2.85 $\times$ [apparent density ($g/cm^3$)]) 　　　[formula 1],

and wherein the air permeability is measured as described in the specification.

The spunbonded nonwoven fabric of the present invention is a long-fiber nonwoven fabric produced by a spunbonding method comprising the following steps (a) to (c) sequentially in this order:

(a) spinning, from a spinneret having a rectangular discharge orifice having an aspect ratio (long side length/short side length) of 1.6 to 8, a conjugate fiber in which a low-melting polymer having a melting point lower by 10 to 140°C than that of a high-melting polymer is provided around the high-melting polymer;

(b) stretching the spun conjugate fibers by suction flow using a high-speed suction gas and collecting the fibers on a moving net conveyor to form the collected fibers into a nonwoven web; and

(c) partially thermally bonding the obtained nonwoven web at a temperature lower by 5 to 80°C than the melting point of the low-melting polymer. The spunbonding method is excellent in productivity and mechanical strength and, in addition, can suppress fluffing that is apt to occur in a staple fiber nonwoven fabric, and in a separation membrane support, a superior membrane formability without causing any other defect such as nonuniform membrane or pin hole can be achieved.

It is important that the spunbonded nonwoven fabric of the present invention is formed of conjugate fibers in which a low-melting polymer having a melting point lower by 10 to 140°C than that of a high-melting polymer is provided around the high-melting polymer. When the spunbonded nonwoven fabric of the present invention is formed of conjugate fibers in which a low-melting polymer having a melting point lower by 10 to 140°C than that of a high-melting polymer is provided around the high-melting polymer, the inside of the nonwoven fabric can be sufficiently thermally bonded in thermocompression bonding, and it is possible to obtain a nonwoven fabric excellent in mechanical strength. Since fibers firmly bind to each other, in the separation membrane support, membrane defects in the casting of a resin solution caused by fluffing can be suppressed.

By setting a melting point difference between the high-melting polymer and the low-melting polymer to 10°C or higher, preferably 20°C or higher, more preferably 30°C or higher, it is possible to obtain thermobondability contributing to the improvement of the mechanical strength, without deteriorating the strength of the high-melting polymer disposed in a center portion of the conjugate fiber. Furthermore, even when the spunbonded nonwoven fabric is used as a substrate to which a resin layer or a functional membrane is attached to the surface of the spunbonded nonwoven fabric, it is possible to impart excellent bonded processability and excellent bondability.

On the other hand, by setting the melting point difference between the high-melting polymer and the low-melting polymer to preferably 140°C or lower, preferably 120°C or lower, more preferably 100°C or lower, it is possible to suppress that a low-melting polymer component is fused with a hot roll during thermocompression bonding using the hot roll to lower productivity. In addition, it is possible to prevent deformation due to the heat applied when using the nonwoven fabric.

It is important that the spunbonded nonwoven fabric of the present invention has a non-pressure bonding portion having an apparent density of 0.20 to 0.60 g/cm$^3$. In the present invention, a pressure bonding portion indicates a portion where fibers on both surfaces of the nonwoven fabric are aggregated and thermally fused, and the non-pressure bonding portion indicates a portion other than the pressure bonding portion. In the non-pressure bonding portion, since fibers on at least one surface are not thermally fused, a surface area of nonwoven fabric fibers per unit area is larger than that of the pressure bonding portion. As a result, the non-pressure bonding portion is an important portion that influences bonding strength between the nonwoven fabric and the resin solution and influences collection efficiency when the nonwoven fabric is used as a filter.

By setting the apparent density of the non-pressure bonding portion to 0.20 g/cm$^3$ or more, preferably 0.25 g/cm$^3$ or more, more preferably 0.30 g/cm$^3$ or more, a nonwoven fabric which is excellent in mechanical strength and is less likely to be deformed by external pressure can be formed. In addition, in the separation membrane support, it is possible to prevent fluffing due to a contact with a process member or the like at the time of forming a separation membrane and to prevent a bleed-through of the resin solution due to excessive permeation and resulting membrane defects at the time of casting of the resin solution.

Further, by setting the apparent density of the non-pressure bonding portion to 0.60 g/cm$^3$ or less, preferably 0.55 g/cm$^3$ or less, more preferably 0.50 g/cm$^3$ or less, air permeability and water permeability of a nonwoven fabric can be secured. In the separation membrane support, when the resin solution is cast in a membrane forming step, the resin solution easily enters the inside, and it is possible to obtain excellent peeling strength.

By setting the apparent density of the pressure bonding portion to preferably 0.8 to 1.38 g/cm$^3$, more preferably 1.0 to 1.35 g/cm$^3$, further preferably 1.2 to 1.3 g/cm$^3$, openings in the pressure bonding portion due to excessive bonding are not formed, and tear strength is not extremely lowered, so that a nonwoven fabric excellent in mechanical strength can be obtained.

In the spunbonded nonwoven fabric of the present invention, when a long axis length of a fiber cross section of the non-pressure bonding portion is a and a short axis length thereof is b, it is important that a fiber flatness a/b satisfies 1.5 to 5. The long axis length a of the fiber cross section is a diameter of a circumscribed circle drawn so as to circumscribe the fiber cross section when the fiber cross section is viewed from the fiber axis direction.

When a perpendicular is drawn in a direction perpendicularly crossing with a straight line (corresponding to a diameter of the circumscribed circle) connecting a contact point between the circumscribed circle and the fiber outer circumference, the short axis length b of the fiber cross section means a maximum length obtained when the perpendicular cuts the fiber cross section.

By setting the fiber flatness to 1.5 or more, preferably 1.7 or more, more preferably 2 or more, a flow path length can be increased when passing through the inside from one surface of the nonwoven fabric to the other surface (back surface). In the separation membrane support, when a resin solution is cast in the membrane forming step, it is possible to suppress a bleed-through of the resin solution due to excessive permeation and resulting membrane defects.

Since the thickness can be reduced even with a non-pressure bonding portion which is not partially thermally bonded, a thickness of the separation membrane can be reduced to increase an area of the separation membrane per a fluid separation element unit. By smoothing the surface of the nonwoven fabric, even when the nonwoven fabric is used as a substrate to which a resin layer or a functional membrane is attached to the surface of the nonwoven fabric, it is possible to impart excellent bonded processability and excellent bondability. In addition, since a projected cross-sectional area of the fiber in a nonwoven fabric thickness direction can be increased, when the nonwoven fabric is used as a filter, dust collection efficiency according to inertial force can be improved.

On the other hand, by setting the fiber flatness to 5 or less, preferably 4 or less, more preferably 3 or less, it is possible to prevent deterioration of the spinning property and deterioration of unevenness in basis weight due to an influence of an air flow on spun fibers.

It is important that the air permeability of the spunbonded nonwoven fabric of the present invention satisfies the following [formula 1].

$$[\text{air permeability (cc/cm}^2\text{•sec)}] \leq 520 \times \exp(-0.0236 \times [\text{basis weight (g/m}^2)] - 2.85 \times [\text{apparent density (g/cm}^3)]]) \qquad \text{[formula 1].}$$

The separation membranes differ in their forms depending on filtration accuracy, and the forms include microfiltration membranes, ultrafiltration membranes, nanofiltration membranes, reverse osmosis membranes and the like. For example, the reverse osmosis membrane is used properly for saline water conversion, brine water desalination, and domestic water purifiers, depending on a filtration object.

Although the basis weight of the separation membrane support is appropriately selected according to the uses and a membrane formation method, by providing a spunbonded nonwoven fabric satisfying the relationship [formula 1] in which the air permeability includes the basis weight and the apparent density, when a resin solution is cast in the membrane forming step, it is possible to sufficiently exhibit the effect of the present invention of suppressing a bleed-through of the resin solution due to excessive permeation and resulting membrane defects and to obtain a separation membrane support excellent in membrane formability.

A preferable range for improving such effects is [air permeability (cc/cm$^2$•sec)] $\leq$ 4 90 $\times$ exp(-0.0236 $\times$ [basis weight (g/m$^2$)] - 2.85 $\times$ [apparent density (g/cm$^3$)]] of [formula 1], and a more preferable range is [air permeability (cc/cm$^2$•sec)] $\leq$ 460 $\times$ exp(-0.0236 $\times$ [basis weight (g/m$^2$)] - 2.85 $\times$ [apparent density (g/cm$^3$)]).

In order to obtain a spunbonded nonwoven fabric in which the air permeability satisfies the above [formula 1], it is important that the spunbonded nonwoven fabric is formed of conjugate fibers in which a low-melting polymer having a melting point lower by 10 to 140°C than that of a high-melting polymer is provided around the high-melting polymer, the nonwoven fabric has a non-pressure bonding portion having an apparent density of 0.20 to 0.60 g/cm$^3$, and the fiber flatness of the non-pressure bonding portion is 1.5 to 5. It is preferable that in the non-pressure bonding portion, the fibers provided such that an absolute value of an angle formed by a long axis direction of the fiber cross section and a nonwoven fabric surface direction is 0 to 45° occupy 60% or more of the overall fibers. Such fibers more preferably occupy 70% or more of the overall fibers and further preferably occupy 80% or more of the overall fibers.

An area ratio of the pressure bonding portion of the spunbonded nonwoven fabric of the present invention, that is, a compression bonding ratio is preferably 5 to 40%. By setting the compression bonding ratio to 5% or more, more preferably 7% or more, further preferably 10% or more, sufficient strength can be imparted to the nonwoven fabric, and occurrence of fluffing on the surface can be suppressed.

On the other hand, by setting the compression bonding ratio to 40% or less, more preferably 35% or less, further preferably 30% or less, it is possible to secure sufficient air permeability and water permeability. In the separation membrane support or an attachment base material, it is possible to prevent that a resin solution serving as a membrane formation stock solution is hard to penetrate into the nonwoven fabric, or attachment properties of a functional membrane and a resin layer are lowered, so that a membrane substance and the resin layer tend to be generated. It is possible to prevent the hand feeling from being hardened and the handling property from being deteriorated.

The depth of the pressure bonding portion of the spunbonded nonwoven fabric of the present invention is preferably 30 to 70%, more preferably 35 to 65%, further preferably 40 to 60% of the thickness of the spunbonded nonwoven fabric. According to this configuration, sufficient strength can be imparted to the spunbonded nonwoven fabric.

When the spunbonded nonwoven fabric has a pressure bonding portion whose both surfaces are concave by, for example, partial thermocompression bonding from both surfaces with a pair of engraving rolls having a convexo-concave pattern, a total value of depths of the pressure bonding portions of both surfaces is taken as the depth of the pressure bonding portion of the spunbonded nonwoven fabric.

Here, the depth of the pressure bonding portion is a difference in height between a bottom (concave portion) and an outer peripheral portion when the pressure bonding portion is viewed from the cross-sectional direction by a scanning electron microscope, and the depth of the pressure bonding portion can be measured by a shape measuring device such as a shape analysis laser microscope or a 3D shape measuring instrument.

The area of the pressure bonding portion of the spunbonded nonwoven fabric of the present invention is preferably 0.2 to 5.0 mm$^2$, more preferably 0.3 to 4.0 mm$^2$, further preferably 0.4 to 3.0 mm$^2$. By setting the area of pressure bonding portion to 0.2 mm$^2$ or more, mechanical strength and dimensional stability are improved, and a spunbonded nonwoven fabric excellent in durability can be obtained. By setting the area of the pressure bonding portion to 5.0 mm$^2$ or less, when the spunbonded nonwoven fabric is used as a separation membrane support or an attachment base material, it is possible that the membrane-forming resin, the resin layer, and the functional membrane tends to peel off at the pressure bonding portion as a starting point.

A number density of the pressure bonding portion of the spunbonded nonwoven fabric of the present invention is preferably 5 to 50 pieces/cm$^2$, more preferably 10 to 45 pieces/cm$^2$, further preferably 15 to 40 pieces/cm$^2$. By setting the number density of the pressure bonding portion to 5 pieces/cm$^2$ or more, the mechanical strength and dimensional stability of the spunbonded nonwoven fabric are improved, and a nonwoven fabric excellent in durability can be obtained. By setting the number density of the pressure bonding portion to 50 pieces/cm$^2$ or less, the thickness of the nonwoven fabric becomes extremely thin, and it is possible to prevent a decrease in air permeability and water permeability.

In the spunbonded nonwoven fabric of the present invention, it is preferable that a Bekk smoothness of a non-embossed surface having no partial thermocompression bonding portion is 1 to 10 seconds. By setting the Bekk smoothness to 10 seconds or less, more preferably 8 seconds or less, further preferably 6 seconds or less, in the separation membrane support, when the resin solution is cast in the membrane forming step, the resin solution more easily enters the inside, an excellent anchor effect is exerted even after solidification, and it is possible to obtain more excellent peeling strength.

The Bekk smoothness is set to 1 second or more, more preferably 2 seconds or more, further preferably 3 seconds or more, whereby, in the separation membrane support, when the resin solution is cast in the membrane forming step, it is possible to prevent nonuniformity of thickness of a membrane-forming resin due to unevenness of a substrate. As a substrate to which a resin layer or a functional membrane is attached to the surface, it is possible to provide excellent bonded processability and bondability.

The basis weight of the spunbonded nonwoven fabric of the present invention is preferably 10 to 150 g/m$^2$. By setting the basis weight to preferably 10 g/m$^2$ or more, more preferably 30 g/m$^2$ or more, further preferably 50 g/m$^2$ or more, a nonwoven fabric having high mechanical strength and excellent dimensional stability can be formed. In the separation membrane support, when a resin solution is cast in the membrane forming step, it is possible to enhance the effect of preventing a bleed-through of the resin solution due to excessive permeation and resulting membrane defects.

On the other hand, by setting the basis weight to preferably 150 g/m$^2$ or less, more preferably 120 g/m$^2$ or less, further preferably 90 g/m$^2$ or less, it is possible to reduce the thickness of the separation membrane in the separation membrane support and to increase the area of the separation membrane per a fluid separation element unit.

The thickness of the spunbonded nonwoven fabric of the present invention is preferably 0.02 to 0.50 mm. By setting the thickness of the nonwoven fabric to preferably 0.02 mm or more, more preferably 0.04 mm or more, further preferably 0.06 mm or more, a nonwoven fabric having high mechanical strength and excellent dimensional stability can be formed. In the separation membrane support, when a resin solution is cast in the membrane forming step, it is possible to enhance the effect of preventing a bleed-through of the resin solution due to excessive permeation and resulting membrane defects.

On the other hand, by setting the thickness of the nonwoven fabric to preferably 0.50 mm or less, more preferably 0.40 mm or less, further preferably 0.30 mm or less, it is possible to reduce the thickness of the separation membrane in the separation membrane support and to increase the area of the separation membrane per a fluid separation element unit.

The single fiber fineness of the thermoplastic fiber constituting the spunbonded nonwoven fabric of the present invention is preferably 0.1 to 3 dtex. By setting the single fiber fineness to preferably 0.1 dtex or more, more preferably 0.3 dtex or more, further preferably 0.5 dtex or more, the spinning property is less likely to be reduced when the spunbonded nonwoven fabric is produced, and the air permeability and the water permeability of the nonwoven fabric can be secured. In the separation membrane support, when the resin solution is cast in the membrane forming step, the resin solution more easily enters the inside, and it is possible to obtain more excellent peeling strength.

On the other hand, by setting the single fiber fineness of the thermoplastic fiber to preferably 3 dtex or less, more preferably 2.5 dtex or less, further preferably 2 dtex or less, it is possible to obtain a spunbonded nonwoven fabric which is excellent in uniformity of formation and surface smoothness and has a high density. In the separation membrane support, when a resin solution is cast in the membrane forming step, it is possible to enhance the effect of preventing a bleed-through of the resin solution due to excessive permeation and resulting membrane defects.

Examples of a resin of thermoplastic fibers constituting the spunbonded nonwoven fabric of the present invention include polyester polymers, polyamide polymers, polyolefin polymers, and mixtures or copolymers thereof. Among these, the thermoplastic fibers constituting the spunbonded nonwoven fabric of the present invention are preferably polyester fibers formed of a polyester polymer because polyester fibers are excellent in spinnability of the fiber and have excellent properties such as mechanical strength, rigidity, heat resistance, water resistance and chemical resistance.

The thermoplastic fiber may contain nucleating agent, matting agent, pigment, fungicide, antimicrobial agent, flame retardant, light stabilizer, UV absorbent, antioxidant, filler, lubricating agent, hydrophilizing agent, and the like. Specifically, metal oxides such as titanium oxide have an effect of reducing the surface friction of fibers to prevent the fusion among fibers, resulting in the improvement in spinning property and also have an effect of increasing heat conductivity, resulting in improvement in the bondability of the spunbonded nonwoven fabric in the thermocompression molding with hot rolls. Aliphatic bisamides such as ethylene-bis-stearic acid amide, and/or alkyl-substituted aliphatic monoamides effectively increase the mold-releasing property between the hot roll and a nonwoven fabric web to improve the conveying performance.

The polyester polymer is a polyester composed of an acid component and an alcohol component. Examples of usable acid components include aromatic carboxylic acids such as terephthalic acid, isophthalic acid, and phthalic acid; aliphatic dicarboxylic acids such as adipic acid and sebacic acid; and alicyclic dicarboxylic acids such as cyclohexane carboxylic acid. Examples of usable alcohol components include ethylene glycol, diethylene glycol, and polyethylene glycol.

Examples of the polyester polymer include polyethylene terephthalate, polybutylene terephthalate, polytrimethylene terephthalate, polyethylene naphthalate, polylactic acid, polybutylene succinate, and copolymers of these. Among them, polyethylene terephthalate is preferably used.

In addition, in the present invention, biodegradable polymers (resins) are also preferably used as the polymer of fibers constituting the nonwoven fabric because the biodegradable resins are easily discarded after use and environmentally friendly. Examples of the biodegradable resin include polylactic acid, polybutylene succinate, polycaprolactone, polyethylene succinate, polyglycolic acid, and polyhydroxybutyrate. Among these, the polylactic acid is preferably used because it is a resin derived from plants, does not waste oil resources, has comparatively high mechanical characteristics and heat resistance, and is a biodegradable resin inexpensively produced. Examples of the polylactic acid particularly preferably used include poly(D-lactic acid), poly(L-lactic acid), copolymers of D-lactic acid and L-lactic acid, and blends of these.

The spunbonded nonwoven fabric of the present invention is formed of conjugate fibers in which a low-melting polymer having a melting point lower by 10 to 140°C than that of a high-melting polymer is provided around the high-melting polymer. The melting point of the high-melting polymer is preferably 160 to 320°C because membrane formability when forming the separation membrane on the support is good and a highly durable separation membrane can be obtained, when the spunbonded nonwoven fabric of the present invention is used as a separation membrane support. By setting the melting point of the high-melting polymer to preferably 160°C or higher, more preferably 170°C or higher, further preferably 180°C or higher, heat resistance can be improved. In addition, dimensional stability to heat is imparted, in the separation membrane support, a dimensional change is made small even when heat is applied during casting of the resin solution in the membrane forming step or in a fluid separation element producing step, and good membrane formability and processability can be obtained.

On the other hand, the high-melting polymer preferably has a melting point of 320°C or lower, more preferably 300°C or lower, and further preferably 280°C or lower in terms of suppression of thermal energy consumed for melting the high-melting polymer in the production of a nonwoven fabric, that is, suppression of productivity decline.

The component ratio of the low-melting polymer contained in the conjugate fiber is preferably 10 to 40% by mass. By setting the component ratio of the low-melting polymer to preferably 40% by mass or less, more preferably 30% by mass or less, further preferably 25% by mass or less, it is possible to suppress deformation against heat applied when the nonwoven fabric is used.

On the other hand, by setting the component ratio of the low-melting polymer contained in the conjugate fiber to 10% by mass or more, more preferably 15% by mass or more, further preferably 20% by mass or more, it is possible to obtain thermobondability contributing to the improvement of the mechanical strength of the nonwoven fabric. Since fibers firmly bind to each other, in the separation membrane support, membrane defects in the casting of a resin solution caused by fluffing can be suppressed.

Examples of the combination of the high-melting polymer and the low-melting polymer (high-melting polymer/low-melting polymer) include polyethylene terephthalate/polybutylene terephthalate, polyethylene terephthalate/polytrimethylene terephthalate, polyethylene terephthalate/polylactic acid, and polyethylene terephthalate/copolymerized polyethylene terephthalate. In addition, isophthalic acid or the like is preferably used as a copolymerization component of the copolymerized polyethylene terephthalate, and among these combinations, a combination of polyethylene terephthalate/isophthalate copolymerized polyethylene terephthalate is particularly preferably used.

As a conjugate form of the conjugate fiber, for example, a conjugate form such as a concentric core-sheath type, an eccentric core-sheath type, and a sea-island type can be used from a viewpoint of efficiently obtaining a thermally bonded point between fibers. Among these, it is preferable to use a concentric core-sheath type as the conjugate form, and by using such a conjugate form, it is possible to firmly bond the fibers to each other by thermocompression bonding. As the transverse cross-sectional shape of the fibers constituting the nonwoven fabric, a flattened transverse cross-sectional shape or an elliptical transverse cross-sectional shape are preferable.

Next, a production method for the spunbonded nonwoven fabric of the present invention will be described.

A production method for a spunbonded nonwoven fabric of the present invention is a production method for a spunbonded nonwoven fabric characterized in that the following steps (a) to (c) are sequentially performed:

(a) spinning, from a spinneret having a rectangular discharge orifice having an aspect ratio (long side length/short side length) of 1.6 to 8, a conjugate fiber in which a low-melting polymer having a melting point lower by 10 to 140°C than that of a high-melting polymer is provided around the high-melting polymer,
(b) stretching the spun conjugate fibers by suction flow using a high-speed suction gas and collecting the fibers on a moving net conveyor to form the collected fibers into a nonwoven web, and
(c) partially thermally bonding the obtained nonwoven web at a temperature lower by 5 to 80°C than the melting point of the low-melting polymer.

In the production method for a spunbonded nonwoven fabric of the present invention, it is important that the discharge orifice of the spinneret of the step (a) has a rectangular shape. According to this configuration, the fiber flatness of the fiber after stretch by suction flow using a high-speed suction gas in the step (b) can be set to 1.5 to 5, and, in addition, even in the non-pressure bonding portion in which the fibers are less likely to be crushed by partially thermally bonding in the step (c), it is possible to obtain a spunbonded nonwoven fabric in which the fiber flatness satisfies 1.5 to 5.

It is important that the aspect ratio (long side length/short side length) of the rectangular discharge orifice is 1.6 to 8. The aspect ratio of the rectangular discharge orifice is a value obtained by dividing the length of the long side of the rectangular discharge orifice by the length of the short side. By setting the aspect ratio of the discharge orifice to preferably 1.6 or more, more preferably 3 or more, further preferably 5 or more, the cross-sectional shape of the spun fibers is further flattened, the fiber flatness after stretching by suction flow using a high-speed suction gas in the step (b) can be set to 1.5 or more.

On the other hand, by setting the aspect ratio of the discharge orifice to 8 or less, preferably 7 or less, more preferably 6 or less, it is possible to prevent deterioration of the spinning property, to suppress an increase in back pressure of the spinneret during spinning, and to reduce a single hole cross-sectional area of the discharge orifice to make suitable for spinning of small fineness.

In the production method for a spunbonded nonwoven fabric of the present invention, a usual conjugate method can be adopted for spinning the conjugate fibers. As a conjugate form of the conjugate fiber, for example, a conjugate form such as the above-described concentric core-sheath type, an eccentric core-sheath type, and a sea-island type can be used from a viewpoint of efficiently obtaining a thermally bonded point between fibers. Among these, it is preferable to use a concentric core-sheath type as the conjugate form, and by using such a conjugate form, it is possible to firmly bond the fibers to each other by thermocompression bonding.

It is preferable that the corner of the rectangular discharge orifice is rounded and curved. According to this constitution, the spinning property can be improved.

The short side length of the rectangular discharge orifice is preferably 0.15 mm or more, more preferably 0.17 mm or more, further preferably 0.20 mm or more. By thus setting the short side length of the discharge orifice, it is possible to prevent that yarn cooling of a spun yarn rapidly progresses, yarn breakage or stretching defect occurs, or the discharge orifice is hard to wash at the time of washing the spinneret, and a polymer and a carbide remain.

In the production method for a spunbonded nonwoven fabric of the present invention, it is preferable that the fiber flatness of the fibers collected by a collection net satisfies 1.5 to 5. When the fiber flatness preferably satisfies 1.5 or more, more preferably 1.7 or more, further preferably 2 or more, even in the non-pressure bonding portion in which the fibers are less likely to be crushed by partially thermal bonding in the step (c), it is possible to obtain a spunbonded nonwoven fabric in which the fiber flatness satisfies 1.5 or more, and in the separation membrane support, when a resin solution is cast in the membrane forming step, it is possible to prevent a bleed-through of the resin solution due to excessive permeation and resulting membrane defects.

By setting the fiber flatness to preferably 5 or less, more preferably 4 or less, further preferably 3 or less, it is possible to prevent deterioration of the spinning property and deterioration of unevenness in basis weight due to an influence of an air flow on spun fibers.

In the production method for a spunbonded nonwoven fabric of the present invention, first, a molten thermoplastic polymer is spun from the spinneret and stretched by suction flow using a high-speed suction gas. Then, the fibers are collected on a moving net conveyor and formed into a nonwoven web.

At this time, in order to prevent generation of wrinkles due to shrinkage of the fibers during thermocompression bonding in a subsequent step, or a decrease in productivity due to fusion of the low-melting polymer component to the hot roll, it is preferable to more highly orient and crystallize the fibers constituting the nonwoven web. Thus, a spinning rate is preferably 3000 m/min or more, more preferably 3500 m/min or more, further preferably 4000 m/min or more. In addition, by preventing excessive orientation and crystallization of the fibers, it is possible to obtain thermobondability contributing to the improvement of the mechanical strength of the spunbonded nonwoven fabric, and therefore, the spinning rate is preferably 5500 m/min or less, more preferably 5000 m/min or less, further preferably 4500 m/min or less.

In the production method for a spunbonded nonwoven fabric of the present invention, it is important that the nonwoven web obtained in the above step (b) is partially thermally bonded at a temperature lower by 5 to 80°C than the melting point of the low-melting polymer in the subsequent step (c). Partial thermal bonding means that thermocompression bonding is performed by using an embossing device including an embossing roll having a predetermined convexo - concave pattern on the upper and lower sides or by using an embossing device in which while an embossing roll having a predetermined convexo - concave pattern on only the upper or lower side is provided, a flat roll is provided on the other side. Alternatively, the partial thermal bonding means that thermal fusing is partially performed by using an ultrasonic bonding apparatus which performs thermal fusing with ultrasonic waves.

In the partial thermocompression bonding by the embossing device, in order to obtain a sufficient thermocompression bonding effect at a partial pressure bonding portion and to prevent an embossed pattern of one of the upper and lower rolls from transferring to the other roll, it is preferable to pair metal rolls.

In the partial thermocompression bonding by the embossing device, pressure is applied by convex portions of both the upper and lower embossing rolls, and a portion in which the fibers are aggregated and fused serves as a pressure bonding portion. When one of the rolls is a flat roll, pressure is applied by the convex portions of the upper or lower embossing roll, and a portion in which the fibers are aggregated and fused serves as a pressure bonding portion. In the partial thermocompression bonding using ultrasonic waves, a portion thermally fused by ultrasonic machining serves as a pressure bonding portion. The non-pressure bonding portion in the present invention refers to a portion other than the pressure bonding portion using the embossing device or the ultrasonic bonding apparatus described above.

The spunbonded nonwoven fabric of the present invention may be subjected to thermocompression bonding processing with a pair of upper and lower flat rolls before and/or after the above step (c) for the purpose of, for example, improving transportability and adjusting the thickness. In this case, the definition of the pressure bonding portion and the non-pressure bonding portion is not changed by the thermocompression bonding processing.

The pair of upper and lower flat rolls to be used is a metal roll or an elastic roll which is not provided with pits and projections on the surface of the roll. The metal roll and another metal roll can be used in a pair, or the metal roll and the elastic roll can be used in a pair. The elastic roll herein is a roll formed of a material having elasticity as compared to the metal roll. As the elastic roll, a so-called paper roll such as paper, cotton and Aramid Paper, a resin-made roll formed of a urethane resin, an epoxy resin, a silicone resin, a polyester resin, hard rubber or a mixture thereof, or the like are used. Among them, a combination of metal roll and metal roll is preferably used because it is possible to obtain a nonwoven fabric excellent in smoothness and having small thickness irregularity in the width direction.

The pressure bonding portion preferably has a circle shape, an elliptical shape, a square shape, a rectangle shape, a parallelogram shape, a lozenge shape, a right hexagonal shape, a right octagonal shape, or the like. It is preferable that the pressure bonding portion uniformly exists at regular intervals in both the longitudinal direction and the width direction of the nonwoven fabric. According to this configuration, it is possible to reduce variations in strength in the nonwoven fabric and to prevent uneven bonding of the membrane-forming resin, the resin layer, and the functional membrane in the separation membrane support or the attachment base material. Further, it is also possible to impart a pattern such as a texture pattern to the entire nonwoven fabric, or to use an embossed pattern having a pressure bonding portion continuous in the longitudinal direction or the width direction.

It is important that the temperature in the partial thermocompression bonding is lower by 5 to 80°C than the melting point of the low-melting polymer. Thermocompression bonding is performed at a temperature of -5°C or lower as the melting point of the low-melting polymer, preferably at a temperature of -10°C or lower as the melting point of the low-melting polymer, more preferably at a temperature of -20°C or lower as the melting point of the low-melting polymer, whereby it is possible to prevent a reduction in tear strength due to excessive bonding and to prevent the nonwoven fabric from becoming brittle. In addition, it is possible to prevent a low-melting polymer component from fusing with a roll during thermocompression bonding, leading to the reduction of productivity.

On the other hand, thermocompression bonding is performed at a temperature higher than -80°C that is the melting point of the low-melting polymer, preferably at a temperature higher than -70°C that is the melting point of the low-melting polymer, more preferably at a temperature higher than -60°C that is the melting point of the low-melting polymer, whereby it is possible to obtain thermobondability contributing to the mechanical strength of the nonwoven fabric and to suppress delamination and fluffing of the surface. A temperature difference between the upper and lower rolls can be set within a range that satisfies the above conditions.

A line pressure in the partial thermocompression bonding is preferably 98 to 1960 N/cm. By setting the line pressure to preferably 98 N/5 cm or more, more preferably 294 N/cm or more, further preferably 490 N/cm or more, it is possible to obtain thermobondability contributing to the mechanical strength of nonwoven fabrics. By setting the line pressure to preferably 1960 N/cm or less, more preferably 980 N/cm or less, further preferably 686 N/cm or less, it is possible to prevent a reduction in tear strength due to excessive bonding and to prevent the nonwoven fabric from becoming brittle.

In the production method for a spunbonded nonwoven fabric of the present invention, the step (b) and the step (c) can be carried out continuously in a production line. After the nonwoven web collected by the step (b) is temporarily bonded by a pair of upper and lower flat rolls or the like, the nonwoven web may be wound up once, and the nonwoven fabric may be wound off again and subjected to the partial thermocompression bonding in the step (c). Particularly, in view of being excellent in productivity, it is preferable that the step (b) and the step (c) are carried out continuously in a production line.

The spunbonded nonwoven fabric of the present invention has a superior membrane formability sufficient to prevent peel-off of a membrane substance when the resin solution is cast and to prevent any other defect such as nonuniform membrane or pin hole in a membrane due to, for example, fluffing of the support, and further exhibits membrane bondability without peel-off of the membrane substance after membrane formation, and therefore, the spunbonded nonwoven fabric can be suitably used as a separation membrane support.

The spunbonded nonwoven fabric of the present invention is formed of conjugate fibers in which a low-melting polymer having excellent bondability is provided and has a smooth surface, and therefore, the spunbonded nonwoven fabric is also preferably used as a substrate to which a resin layer or a functional membrane is attached to the surface. As a method of bonding the resin, it is possible to use, for example, a method in which a resin membrane such as a film, a resin material having a predetermined shape, a functional membrane, or the like is superimposed with the spunbonded nonwoven fabric of the present invention and laminated under heating or a method in which a resin solution imparted with fluidity by a molten resin or a solvent is discharged from a die and directly applied to a nonwoven fabric. As in dip processing, the entire nonwoven fabric may be impregnated with a resin and fixed.

The application of the spunbonded nonwoven fabric of the present invention is not limited to the above application. The spunbonded nonwoven fabric of the present invention can be used for, for example, industrial materials such as filters, filter substrates, and wire covering base materials, building materials such as wallpaper, moisture permeable waterproof sheets, roofing underlaying materials, sound insulation materials, heat insulation materials, and sound absorbing materials, living materials such as wrapping materials, bag materials, signboard materials, and printing base materials, construction materials such as weedproof sheets, drainage materials, ground reinforcement materials, sound insulation materials, and sound absorbing materials, agricultural materials such as whole covering sheets and light shielding sheets, ceiling materials, vehicle materials such as spare tire cover materials, and the like.

Examples

Next, the spunbonded nonwoven fabric of the present invention and the production method for the spunbonded nonwoven fabric will be described specifically based on Examples.

[Measurement Method]

(1) Intrinsic Viscosity (IV)

The intrinsic viscosity IV of a polyethylene terephthalate resin was determined by the method below. In 100 ml of o-chlorophenol, 8 g of a sample was dissolved, and the relative viscosity $\eta_r$ was determined at a temperature of 25°C with an Ostwald viscometer in accordance with the equation below.

$$\eta_r = \eta/\eta_0 = (t \times d)/(t_0 \times d_0)$$

(wherein $\eta$ represents the viscosity of the polymer solution; $\eta_0$ represents the viscosity of ortho-chlorophenol; t represents the dropping time (seconds) of the solution; d represents the density of the solution (g/cm$^3$); $t_0$ represents the dropping time (seconds) of ortho-chlorophenol; and $d_0$ represents the density of ortho-chlorophenol (g/cm$^3$).)

Subsequently, the intrinsic viscosity IV was calculated by the following formula from the relative viscosity $\eta_r$.

$$IV = 0.0242\eta_r + 0.2634.$$

(2) Melting Point (°C)

The melting points of thermoplastic resins used were measured by using a differential scanning calorimeter (Q100 manufactured by TA Instruments) under the following conditions, and average of the endothermic peak temperature was calculated and used as the melting point of the resin measured. When the resin before the fiber formation has a plurality of endothermic peaks, the peak temperature on the highest side is adopted. When the fiber is measured, similar measurement can be conducted to estimate the melting point of each component from the plurality of endothermic peaks.

- Measurement atmosphere: nitrogen stream (150 ml/min)
- Temperature range: 30 to 350°C
- Rate of temperature increase: 20°C/min
- Sample amount: 5 mg

(3) Fiber Flatness and Average Single Fiber Fineness (dtex)

Ten small sample pieces were randomly taken from a nonwoven fabric, and their cross-sectional images were taken at a magnification of 500 to 3000 using a scanning electron microscope. The fibers taken in a vertical direction with respect to the fiber axis in the micrograph were selected, the long axis length a ($\mu$m), the short axis length b (pm), and a fiber cross-sectional area ($\mu$m$^2$) of each ten fibers from each small sample piece, that is, a total of 100 fibers, were measured, and the average values of them were obtained. The long axis length a of the fiber cross-section is a diameter of a circumscribed circle drawn so as to circumscribe the fiber cross-section. When a perpendicular is drawn in a direction perpendicularly crossing with a straight line (corresponding to a diameter of the circumscribed circle) connecting a contact point between the circumscribed circle and the fiber outer circumference, the short axis length b of the fiber cross-section means a maximum length obtained when the perpendicular cuts the fiber cross-section.

Subsequently, the fiber flatness and the average single fiber fineness (dtex) were determined by the following formulae, and rounded to one decimal place. Here, the density of polyethylene terephthalate resin/ copolymerized polyethylene terephthalate resin was 1.38 g/cm$^3$.

· Fiber flatness = (average value of long axis lenght a) / (average value of short side lenght b) · Average single fiber finesses (dtex) = [average value of fiber cross-sectiponal area ($\mu$m$^2$) ] $\times$ [density of resin (g/cm$^3$) ]/100.

(4) Basis Weight of Nonwoven Fabric (g/m$^2$)

In the measurement of the basis weight of the nonwoven fabric, three test pieces each having a size of 30 cm $\times$ 50 cm were taken per 1 m at equal intervals along the width direction according to 6.2 of JIS L1913 (2010 edition) "Determination of mass per unit area," and mass (g) of each test piece at standard state was measured. The average value was rounded to an integer and expressed as mass per 1 m$^2$ (g/m$^2$).

(5) Thickness of Nonwoven Fabric (mm)

For the thickness of the nonwoven fabric, according to 5.1 of JIS L1906 (2000 edition), thicknesses of 10 locations equally spaced per 1 m in a width direction of a nonwoven fabric were measured in hundredth of a millimeter, applying a load of 10 kPa by use of an indenter of 10 mm in diameter, and an average value of measurements was rounded off to two decimal places.

(6) Apparent Density of Non-Pressure Bonding Portion of Nonwoven Fabric (g/cm$^3$)

The apparent density (g/cm$^3$) of the non-pressure bonding portion was calculated using the following formula from the basis weight (g/m$^2$) of the nonwoven fabric before rounding obtained in the above (4) and the thickness (mm) of the nonwoven fabric before rounding obtained in the above (5), and the apparent density was rounded to two decimal places.

· Apparent density (g/cm$^3$) of non-pressure bonding portion = [basis weight (g/m$^2$)]/[thickness (mm)] $\times$ 10$^{-3}$

**(7) Compression Bonding Ratio of Nonwoven Fabric (%)**

For the compression bonding ratio of the nonwoven fabric, ten small sample pieces were randomly taken from the nonwoven fabric, and a total of 10 pictures were taken one by one from each sample at a magnification of 20 to 50 using a scanning electron microscope such that the picture includes at least five or more pressure bonding portions.
The area of the pressure bonding portion and an area of a minimum unit of a repeated pattern of an embossment are obtained from each picture and averaged. Thereafter, the compression bonding ratio (%) was calculated using the following formula and rounded to an integer.

Compression bonding ratio (%) = (area of pressure bonding portion) $\times$ (number of pressure bonding portions include in minimum unit of repeated pattern)/(area of minimum unit of repeated pattern).

**(8) Air Permeability of Nonwoven Fabric (cc/cm$^2$·sec)**

10 test pieces of 10 cm square were taken per 1 m at equal intervals along a width direction of a nonwoven fabric according to Frazier method of JIS L1913 (2010), and the air permeability of the nonwoven fabric was measured by using gas flow tester FX3300 manufactured by TEXTEST at a test pressure of 125 Pa. The obtained value was averaged, the average was rounded to one decimal place for use as the air permeability (cc/cm$^2$•sec).

**(9) Tensile Strength of Nonwoven Fabric (N/5 cm)**

The tensile strength of the nonwoven fabric was measured according to 6.3.1 of JIS L1913 (2010 edition). Test pieces each having a size of 5 cm $\times$ 30 cm whose long side corresponded to the machine direction and the transverse direction were taken from three places per 1 m at equal intervals along a width direction, and tensile tests were carried out at a grip distance of 20 cm and a tensile rate of 10 cm/min using a constant speed elongation type tensile testing machine. The strength at the time of stretching the sample to break was read out, and a value obtained by rounding to an integer was taken as the tensile strength (N/5 cm).

**(10) Bekk Smoothness of Nonwoven Fabric (sec)**

For the Bekk smoothness of the nonwoven fabric, five places per 1 m at equal intervals along a width direction from non-embossed surfaces (flat roll surfaces) of the nonwoven fabric were measured using a Bekk smoothness testing machine according to JIS P8119 (1998 edition). Subsequently, an average value of five places was round to an integer and taken as the Bekk smoothness.

**(11) Cast Liquid Bleed-Through Property at the Time of Forming Membrane**

The back surface of manufactured polysulfone membrane was visually observed, the cast liquid bleed-through property was evaluated with the following five criteria, and levels with 3 to 5 points were evaluated as acceptable levels.

    5 points: no bleed-through of cast liquid was observed.
    4 points: slight bleed-through of cast liquid was observed (area ratio: 5% or less).
    3 points: bleed-through of cast liquid was partially observed (area ratio: 6 to 25%).
    2 points: bleed-through of cast liquid was observed (area ratio: 26 to 50%).
    1 point: bleed-through of cast liquid was observed in a majority of the part (area ratio: 51% or more).

**(12) Membrane Bondability**

The surface of manufactured polysulfone membrane was visually observed, the bondability of the membrane was evaluated with the following five criteria, and a level with 5 points was evaluated as an acceptable level.

5 points: no peel-off of membrane was observed.
4 points: slight peel-off of membrane was observed (area ratio: 5% or less).
3 points: peel-off of membrane was partially observed (area ratio: 6 to 25%).
2 points: peel-off of membrane was observed (area ratio: 26 to 50%).
1 point: peel-off of membrane was observed in a majority of the part (area ratio: 51% or more).

(13) Peeling Strength of Membrane (N/5 cm)

Five test pieces which each have a size of 50 mm × 200 mm and in which the machine direction was the long side direction were taken per 1 m at equal intervals along a width direction from a separation membrane support in which a polysulfone membrane was formed. At one end of the test piece, the polysulfone layer was peeled away from the separation membrane support. The polysulfone layer was fixed to one grip of a constant speed elongation type tensile testing machine, and the separation membrane support was fixed to the other grip. The strength was measured at a grip distance of 100 mm and a tensile rate of 20 mm/minute. The maximum value of the strength of each of the test pieces was read, and all the maximum values were averaged. A value obtained by rounding to one decimal place was taken as the peeling strength of the separation membrane.
When the polysulfone membrane was bonded extremely firmly, it was difficult to peel off the polysulfone membrane from the separation membrane support to prepare a test piece, or when the peeling strength exceeds 3.0 N/5 cm, it was difficult to perform quantitative evaluation due to damage of the membrane during measurement. In such a case, in Tables 1 and 2, the peeling strength is indicated as ">3.0".

[Example 1]

(Core Component)

A polyethylene terephthalate resin that had been dried to a water content of 50 ppm or less and had an intrinsic viscosity (IV) of 0.65, a melting point of 260°C, and a titanium oxide content of 0.3% by mass was used as a core component.

(Sheath Component)

A copolymerized polyethylene terephthalate resin that had been dried to a water content of 50 ppm or less and had an intrinsic viscosity (IV) of 0.66, an isophthalic acid copolymerization ratio of 11% by mole, a melting point of 230°C, and a titanium oxide content of 0.2% by mass was used as a sheath component.

(Spinning and Collection of Nonwoven Web)

The core component and the sheath component were melted at temperatures of 295°C and 270°C, respectively, to form a conjugate in a concentric core-sheath type to perform spinning from a discharge orifice having a rectangular cross-sectional shape of 0.2 mm × 1.0 mm under a condition of a spinneret temperature of 300°C with a mass ratio of the core component and the sheath component of 80/20, followed by spinning at a spinning rate of 4300 m/min by an ejector, and the fibers were collected on a moving net conveyer to obtain a nonwoven web.

(Partial Thermocompression Bonding)

The collected nonwoven web was passed between a pair of upper and lower metal flat rolls, the surface temperature of the roll was 140°C, and temporary thermocompression bonding was performed under the condition of the line pressure of 490 N/cm. Thereafter, the nonwoven web was passed between a pair of upper and lower metal rolls in which the upper roll was an embossed roll with regularly arranged convex portions having a dot pattern and the lower roll was a flat roll, the surface temperature of the roll was 150°C, and partial thermocompression bonding was performed under the condition of the line pressure of 588 N/cm. The obtained spunbonded nonwoven fabric had a fiber flatness of 2.2, an average single fiber fineness of 2.0 dtex, a compression bonding ratio of 28.0%, a basis weight of 70 g/m$^2$, a thickness of 0.23 mm, an apparent density of 0.31 g/cm$^3$, an air permeability of 31.1 cc/cm$^2$·sec, and a Bekk smoothness of 6.6 seconds.

(Formation of Separation Membrane)

The obtained spunbonded nonwoven fabric having a width of 50 cm and a length of 10 m was wound off at a speed of 12 m/min. On a non-embossed surface (flat roll surface), a solution (cast liquid) of 22% by mass polysulfone ("Udel" (registered trademark) P3500 manufactured by Solvay Advanced Polymers) in dimethylformamide was cast at room temperature (20°C) so as to give a thickness of 45 um. The spunbonded nonwoven fabric with the cast liquid was immediately immersed in pure water at room temperature (20°C) for 10 seconds, next immersed in pure water at a temperature of 75°C for 120 seconds, subsequently immersed in pure water at a temperature of 90°C for 120 seconds, and then wound up at a tension of 100 N/full-width, thus yielding a polysulfone membrane. At that time, no bleed-through of the cast liquid was observed, no bending of the polysulfone membrane was observed during winding off and winding up, no peel-off of the polysulfone membrane was observed, and the membrane formability was good. The peeling strength was not measurable because the polysulfone membrane was broken during the test, and the polysulfone membrane was firmly bonded. Table 1 shows results.

[Example 2]

(Spunbonded Nonwoven Fabric)

A spunbonded nonwoven fabric was produced in the same manner as in Example 1 except that the temperature of temporary thermocompression bonding was 150°C and the temperature of partial thermocompression bonding was 190°C. The obtained spunbonded nonwoven fabric had a fiber flatness of 2.2, an average single fiber fineness of 2.0 dtex, a compression bonding ratio of 28.0%, a basis weight of 70 g/m$^2$, a thickness of 0.17 mm, an apparent density of 0.41 g/cm$^3$, an air permeability of 16.6 cc/cm$^2$·sec, and a Bekk smoothness of 9.0 seconds.

(Formation of Separation Membrane)

On the obtained spunbonded nonwoven fabric, a polysulfone membrane was formed in the same manner as in Example 1. At that time, no bleed-through of the cast liquid was observed, no bending of the polysulfone membrane was observed during winding off and winding up, no peel-off of the polysulfone membrane was observed, and the membrane formability was good. The peeling strength was not measurable because the polysulfone membrane was broken during the test, and the membrane was firmly bonded. Table 1 shows results.

[Example 3]

(Spunbonded Nonwoven Fabric)

A spunbonded nonwoven fabric was produced in the same manner as in Example 1 except that spinning was performed from a discharge orifice having a rectangular cross-sectional shape of 0.2 mm × 0.4 mm. The obtained spunbonded nonwoven fabric had a fiber flatness of 1.5, an average single fiber fineness of 2.0 dtex, a compression bonding ratio of 28.0%, a basis weight of 70 g/m$^2$, a thickness of 0.24 mm, an apparent density of 0.29 g/cm$^3$, an air permeability of 36.9 cc/cm$^2$·sec, and a Bekk smoothness of 3.6 seconds.

(Formation of Separation Membrane)

On the obtained spunbonded nonwoven fabric, a polysulfone membrane was formed in the same manner as in Example 1. At that time, a slight bleed-through of the cast liquid was observed, no bending of the polysulfone membrane was observed during winding off and winding up, no peel-off of the polysulfone membrane was observed, and the membrane formability was good. The peeling strength was not measurable because the polysulfone membrane was broken during the test, and the membrane was firmly bonded. Table 1 shows results.

[Example 4]

(Spunbonded Nonwoven Fabric)

A spunbonded nonwoven fabric was produced in the same manner as in Example 1 except that the basis weight was 100 g/m$^2$ and the temperature of partial thermocompression bonding was 170°C. The obtained spunbonded nonwoven fabric had a fiber flatness of 2.2, an average single fiber fineness of 2.0 dtex, a compression bonding ratio of 28.0%, a thickness of 0.27 mm, an apparent density of 0.37 g/cm$^3$, an air permeability of 12.6 cc/cm$^2$·sec, and a Bekk smoothness of 6.8 seconds.

(Formation of Separation Membrane)

On the obtained spunbonded nonwoven fabric, a polysulfone membrane was formed in the same manner as in Example 1. At that time, no bleed-through of the cast liquid was observed, no bending of the polysulfone membrane was observed during winding off and winding up, no peel-off of the polysulfone membrane was observed, and the membrane formability was good. The peeling strength was not measurable because the polysulfone membrane was broken during the test, and the membrane was firmly bonded. Table 1 shows results.

[Example 5]

(Raw Material)

The same raw materials as in Example 1 were used.

(Spinning and Collection of Nonwoven Web)

The core component and the sheath component were melted at temperatures of 295°C and 270°C, respectively, to form a conjugate in a concentric core-sheath type to perform spinning from a discharge orifice having a rectangular cross-sectional shape of 0.2 mm $\times$ 1.0 mm under a condition of a spinneret temperature of 300°C with a mass ratio of the core component and the sheath component of 80/20, followed by spinning at a spinning rate of 4200 m/min by an ejector, and the fibers were collected on a moving net conveyer to obtain a nonwoven web.

(Partial Thermocompression Bonding)

The collected fiber web was passed between a pair of upper and lower metal flat rolls, the surface temperature of the roll was 170°C, and temporary thermocompression bonding was performed under the condition of the line pressure of 490 N/cm. Thereafter, the nonwoven web was passed between a pair of upper and lower metal rolls in which the upper roll was an embossed roll with regularly arranged convex portions having a dot pattern and the lower roll was a flat roll, the surface temperature of the roll was 190°C, and partial thermocompression bonding was performed under the condition of the line pressure of 588 N/cm. The obtained spunbonded nonwoven fabric had a fiber flatness of 1.8, an average single fiber fineness of 1.2 dtex, a compression bonding ratio of 28.0%, a basis weight of 30 g/m$^2$, a thickness of 0.08 mm, an apparent density of 0.38 g/cm$^3$, an air permeability of 58.6 cc/cm$^2$·sec, and a Bekk smoothness of 8.0 seconds.

(Formation of Separation Membrane)

On the obtained spunbonded nonwoven fabric, a polysulfone membrane was formed in the same manner as in Example 1. At that time, a bleed-through of the cast liquid was partially observed, no bending of the polysulfone membrane was observed during winding off and winding up, no peel-off of the polysulfone membrane was observed, and the membrane formability was unproblematic. The peeling strength was not measurable because the polysulfone membrane was broken during the test, and the membrane was firmly bonded. Table 1 shows results.

[Table 1]

| | | | | Example 1 | Example 2 | Example 3 | Example 4 | Example 5 |
|---|---|---|---|---|---|---|---|---|
| Nonwoven fabric | Types of nonwoven fabric | | | SB | SB | SB | SB | SB |
| | Fiber composition | Core component | Type of resin | PET | PET | PET | PET | PET |
| | | | Melting point (°C) | 260 | 260 | 260 | 260 | 260 |
| | | Sheath component | Type of resin | co-PET | co-PET | co-PET | co-PET | co-PET |
| | | | Melting point (°C) | 230 | 230 | 230 | 230 | 230 |
| | | Sheath component ratio (% by mass) | | 20 | 20 | 20 | 20 | 20 |
| | Aspect ratio of discharge orifice | | | 5.0 | 5.0 | 2.0 | 5.0 | 5.0 |
| | Spinning rate (m/min) | | | 4300 | 4300 | 4300 | 4300 | 4200 |
| | Partial thermocompression bonding | Temperature (°C) | Upper roll | 150 | 190 | 150 | 170 | 190 |
| | | | Lower roll | 150 | 190 | 150 | 170 | 190 |
| | | Line pressure (N/cm) | | 588 | 588 | 588 | 588 | 588 |
| | | Compression bonding ratio (%) | | 28 | 28 | 28 | 28 | 28 |
| | Fiber flatness | | | 2.2 | 2.2 | 1.5 | 2.2 | 1.8 |
| | Average single fiber fineness (dtex) | | | 2.0 | 2.0 | 2.0 | 2.0 | 1.2 |
| | Basis weight (g/m²) | | | 70 | 70 | 70 | 100 | 30 |
| | Thickness (mm) | | | 0.23 | 0.17 | 0.24 | 0.27 | 0.08 |
| | Apparent density (g/cm³) | | | 0.31 | 0.41 | 0.29 | 0.37 | 0.38 |
| | Air permeability (cc/cm²·sec) | | | 31.1 | 16.6 | 36.9 | 12.6 | 58.6 |
| | Bekk smoothness (sec) | | | 6.6 | 9.0 | 3.6 | 6.8 | 8.0 |
| | Tensile strength (N/5 cm) | Machine direction (MD) | | 285 | 252 | 276 | 531 | 108 |
| | | Transverse direction (TD) | | 130 | 113 | 129 | 231 | 38 |
| Separation membrane | Membrane forming processability | Liquid bleed-through property | | 5 | 5 | 4 | 5 | 3 |
| | | Membrane bondability | | 5 | 5 | 5 | 5 | 5 |
| | Membrane peeling strength (cN) | | | > 3.0 | > 3.0 | > 3.0 | > 3.0 | 2.7 |

[Comparative Example 1]

(Spunbonded Nonwoven Fabric)

A spunbonded nonwoven fabric was produced in the same manner as in Example 1 except that the discharge rate of the resin discharged from a spinneret was adjusted and the spinneret having a round discharge orifice with φ 0.3 mm was used. The obtained spunbonded nonwoven fabric had a fiber flatness of 1.0, an average single fiber fineness of 1.9 dtex, a compression bonding ratio of 28.0%, a basis weight of 70 g/m², a thickness of 0.25 mm, an apparent density of 0.28 g/cm³, an air permeability of 53.0 cc/cm²·sec, and a Bekk smoothness of 3.1 seconds.

(Formation of Separation Membrane)

On the obtained spunbonded nonwoven fabric, a polysulfone membrane was formed in the same manner as in Example 1. At that time, no bending of the polysulfone membrane was observed during winding off and winding up, and no peel-off of the polysulfone membrane was observed. However, a bleed-through of the cast liquid occurred in a majority of the part, and it was difficult to use as a separation membrane support. Table 2 shows results.

[Comparative Example 2]

(Raw Material)

A polyethylene terephthalate resin that had been dried to a water content of 50 ppm or less and had an intrinsic viscosity (IV) of 0.65, a melting point of 260°C, and a titanium oxide content of 0.3% by mass was used. No sheath component was used, and a single component was used.

(Spinning and Collection of Nonwoven Web)

The above raw material was melted at a temperature of 295°C to perform spinning from a discharge orifice having a rectangular cross-sectional shape of 0.2 mm × 1.0 mm under a condition of a spinneret temperature of 300°C, followed by spinning at a spinning rate of 4400 m/min by an ejector, and the fibers were collected on a moving net conveyer to obtain a nonwoven web.

(Partial Thermocompression Bonding)

The collected nonwoven web was passed between a pair of upper and lower metal flat rolls, the surface temperature of the roll was 160°C, and temporary thermocompression bonding was performed under the condition of the line pressure of 490 N/cm. Thereafter, the nonwoven web was passed between a pair of upper and lower metal rolls in which the upper roll was an embossed roll with regularly arranged convex portions having a dot pattern and the lower roll was a flat roll, and temporary thermocompression bonding was performed under the condition of the surface temperature of the roll set to 240°C, the linear pressure of 588 N/cm. The obtained spunbonded nonwoven fabric had a fiber flatness of 2.1, an average single fiber fineness of 2.0 dtex, a compression bonding ratio of 28.0%, a basis weight of 70 g/m$^2$, a thickness of 0.27 mm, an apparent density of 0.26 g/cm$^3$, an air permeability of 38.2 cc/cm$^2$·sec, and a Bekk smoothness of 4.6 seconds.

(Formation of Separation Membrane)

On the obtained spunbonded nonwoven fabric, a polysulfone membrane was formed in the same manner as in Example 1. At that time, no bending of the polysulfone membrane was observed during winding off and winding up, and no peel-off of the polysulfone membrane was observed. However, a bleed-through of the cast liquid occurred, and it was difficult to use as a separation membrane support. Table 2 shows results.

[Comparative Example 3]

(Spunbonded Nonwoven Fabric)

A spunbonded nonwoven fabric was produced in the same manner as in Example 1 except that spinning was performed from a discharge orifice having a rectangular cross-sectional shape of 0.2 mm × 0.3 mm. The obtained spunbonded nonwoven fabric had a fiber flatness of 1.2, an average single fiber fineness of 2.0 dtex, a compression bonding ratio of 28.0%, a basis weight of 70 g/m$^2$, a thickness of 0.25 mm, an apparent density of 0.29 g/cm$^3$, an air permeability of 47.6 cc/cm$^2$·sec, and a Bekk smoothness of 3.2 seconds.

(Formation of Separation Membrane)

On the obtained spunbonded nonwoven fabric, a polysulfone membrane was formed in the same manner as in Example 1. At that time, no bending of the polysulfone membrane was observed during winding off and winding up, and no peel-off of the polysulfone membrane was observed. However, a bleed-through of the cast liquid occurred in a majority of the part, and it was difficult to use as a separation membrane support. Table 2 shows results.

[Comparative Example 4]

(Raw Material)

The same raw materials as in Example 1 were used.

(Spinning and Collection of Nonwoven Web)

The core component and the sheath component were melted at temperatures of 295°C and 270°C, respectively, to form a conjugate in a concentric core-sheath type to perform spinning from a round discharge orifice with φ 0.3 mm under a condition of a spinneret temperature of 300°C with a mass ratio of the core component and the sheath component of 80/20, followed by spinning at a spinning rate of 4300 m/min by an ejector, and the fibers were collected on a moving net conveyer to obtain a nonwoven web.

(Thermocompression Bonding)

The obtained nonwoven web was passed between a pair of upper and lower metal flat rolls, the surface temperature of the roll was 130°C, and temporary thermocompression bonding was performed under the condition of the line pressure of 490 N/cm. The obtained nonwoven fabric web had a fiber flatness of 1.0, an average single fiber fineness of 1.2 dtex, and a basis weight of 36 g/m$^2$.

Subsequently, two spunbonded nonwoven fabrics obtained were superimposed with each other. A set of three flat rolls including an upper resin elastic roll having a hardness (Shore D) of 91, a middle metal roll, and a lower resin elastic roll having a hardness (Shore D) of 75 was used, and the nonwoven fabric laminate was passed between the middle roll and the lower roll and thereby thermocompression bonded. The nonwoven fabric laminate was turned and then passed between the upper roll and the middle roll and thereby thermocompression bonded. At this time, as for the surface temperatures of three flat rolls, the upper roll had a surface temperature of 130°C, the middle roll had a surface temperature of 190°C, and the lower roll had a surface temperature of 140°C. The line pressure was 1862 N/cm. The obtained spunbonded nonwoven fabric had a basis weight of 72 g/m$^2$, a thickness of 0.08 mm, an apparent density of 0.90 g/cm$^3$, and an air permeability of 0.8 cc/cm$^2$·sec. The Bekk smoothness of the front surface was 35.0 seconds, and the Bekk smoothness of the back surface was 12.2 seconds.

(Formation of Separation Membrane)

On the obtained spunbonded nonwoven fabric, a polysulfone membrane was formed in the same manner as in Example 1 such that the surface having a Beck smoothness of 35.0 seconds was used as a membrane forming surface. At this time, although no bleed-through of the cast liquid was observed, bending or rolling of the membrane was partially observed during winding off and winding up, and processing loss occurred. In addition, peel-off of the polysulfone membrane occurred slightly. The peeling strength of the polysulfone membrane was measured at a portion where peel-off was not visually observed, so that the peeling strength was 1.5 N/5 cm. Table 2 shows results.

[Table 2]

| | | | | Comparative Example 1 | Comparative Example 2 | Comparative Example 3 | Comparative Example 4 |
|---|---|---|---|---|---|---|---|
| Nonwoven fabric | | Types of nonwoven fabric | | SB | SB | SB | SB |
| | Fiber composition | Core component | Type of resin | PET | PET | PET | PET |
| | | | Melting point (°C) | 260 | 260 | 260 | 260 |
| | | Sheath component | Type of resin | co-PET | – | co-PET | co-PET |
| | | | Melting point (°C) | 230 | – | 230 | 230 |
| | | Sheath component ratio (% by mass) | | 20 | – | 20 | 20 |
| | Aspect ratio of discharge orifice | | | (Round) | 5.0 | 1.5 | (Round) |
| | Spinning rate (m/min) | | | 4300 | 4400 | 4300 | 4300 |
| | Partial thermocompression bonding | Temperature (°C) | Upper roll | 150 | 240 | 150 | – |
| | | | Lower roll | 150 | 240 | 150 | – |
| | | Line pressure (N/cm) | | 588 | 588 | 588 | – |
| | | Compression bonding ratio (%) | | 28 | 28 | 28 | – |
| | Fiber flatness | | | 1.0 | 2.1 | 1.2 | 1.0 |
| | Average single fiber fineness (dtex) | | | 1.9 | 2.0 | 2.0 | 1.2 |
| | Basis weight (g/m$^2$) | | | 70 | 70 | 70 | 72 |
| | Thickness (mm) | | | 0.25 | 0.27 | 0.25 | 0.08 |
| | Apparent density (g/cm$^3$) | | | 0.28 | 0.26 | 0.29 | 0.90 |
| | Air permeability (cc/cm$^2$·sec) | | | 53.0 | 38.2 | 47.6 | 0.8 |
| | Bekk smoothness (sec) | | | 3.1 | 4.6 | 3.2 | 35.0/12.2 |
| | Tensile strength (N/5 cm) | | Machine direction (MD) | 272 | 219 | 270 | 428 |
| | | | Transverse direction (TD) | 133 | 102 | 121 | 206 |
| Separation membrane | Membrane forming processability | | Liquid bleed-through property | 1 | 2 | 1 | 5 |
| | | | Membrane bondability | 5 | 5 | 5 | 4 |
| | Membrane peeling strength (cN) | | | > 3.0 | > 3.0 | > 3.0 | 1.5 |

<Summary>

As shown in Table 1, the spunbonded nonwoven fabrics of Examples 1 to 5 in which the apparent density was 0.20 to 0.60 g/cm$^3$, the fiber flatness was 1.5 to 5, and the air permeability satisfied [formula 1] had good membrane formability, were excellent in bondability of a polysulfone membrane and peeling strength, and were suitable as separation membrane supports.

On the other hand, as shown in Table 2, in the spunbonded nonwoven fabrics of Comparative Examples 1 and 3 having a low fiber flatness and the spunbonded nonwoven fabric of Comparative Example 2 formed of a single component polyester resin, membrane defects due to bleed-through of the cast solution occurred, and it was difficult to use these spunbonded nonwoven fabrics as separation membrane supports. The spunbonded nonwoven fabric of Comparative Example 4 which was thermocompression bonded by a metal roll and an elastic roll and had a high density and a remarkably low air permeability had problems in the passability in the membrane forming step, and the peeling strength of the polysulfone membrane was low.

**Claims**

1. A spunbonded nonwoven fabric comprising thermoplastic fibers, wherein the thermoplastic fiber is a conjugate fiber in which a low-melting polymer having a melting point lower by 10 to 140°C than that of a high-melting polymer is provided around the high-melting polymer, the spunbonded nonwoven fabric has a non-pressure bonding portion such that fibers on at least one surface are not thermally fused, the non-pressure bonding portion having an apparent density of 0.20 to 0.60 g/cm$^3$, wherein the apparent density of the non-pressure bonding portion is calculated from the following equation:

Apparent density (g/cm$^3$) of non-pressure bonding portion = [basis weight of the nonwoven fabric (g/m$^2$)]/[thickness of the nonwoven fabric (mm)] $\times$ 10$^{-3}$

wherein the basis weight and thickness of the nonwoven fabric are measured as described in the specification; and wherein when a long axis length of a fiber cross section of the non-pressure bonding portion is a and a short axis length thereof is b, a fiber flatness a/b is 1.5 to 5, and an air permeability satisfies [formula 1]:

[air permeability (cc/cm$^2$●sec)] $\leq$ 520 $\times$ exp(-0.0236 $\times$ [basis weight (g/m$^2$)] - 2.85 $\times$ [apparent density (g/cm$^3$)])     [formula 1],

 and wherein the air permeability is measured as described in the specification;
and wherein the spunbonded nonwoven fabric is produced by a production method comprising the following steps (a) to (c) sequentially in this order:

    (a) spinning, from a spinneret having a rectangular discharge orifice having an aspect ratio (long side length/short side length) of 1.6 to 8, a conjugate fiber in which a low-melting polymer having a melting point lower by 10 to 140°C than that of a high-melting polymer is provided around the high-melting polymer;
    (b) stretching the spun conjugate fibers by suction flow using a high-speed suction gas and collecting the fibers on a moving net conveyor to form the collected fibers into a nonwoven web; and
    (c) partially thermally bonding the obtained nonwoven web at a temperature lower by 5 to 80°C than the melting point of the low-melting polymer.

2. The spunbonded nonwoven fabric according to claim 1, wherein a compression bonding ratio of the spunbonded nonwoven fabric is 5 to 40%.

3. The spunbonded nonwoven fabric according to claim 1 or 2, wherein the basis weight of the spunbonded nonwoven fabric is 10 to 150 g/m$^2$.

4. The spunbonded nonwoven fabric according to any one of claims 1 to 3, wherein a single fiber fineness of the thermoplastic fiber is 0.5 to 3 dtex.

5. The spunbonded nonwoven fabric according to any one of claims 1 to 4, wherein the thermoplastic fiber is a polyester fiber.

6. A separation membrane support comprising the spunbonded nonwoven fabric according to any one of claims 1 to 5.

7. A production method for a spunbonded nonwoven fabric as claimed in any one of claims 1 to 5, the method comprising the following steps (a) to (c) sequentially in this order:

    (a) spinning, from a spinneret having a rectangular discharge orifice having an aspect ratio (long side length/short side length) of 1.6 to 8, a conjugate fiber in which a low-melting polymer having a melting point lower by 10 to 140°C than that of a high-melting polymer is provided around the high-melting polymer;
    (b) stretching the spun conjugate fibers by suction flow using a high-speed suction gas and collecting the fibers on a moving net conveyor to form the collected fibers into a nonwoven web; and
    (c) partially thermally bonding the obtained nonwoven web at a temperature lower by 5 to 80°C than the melting point of the low-melting polymer.

8. The production method for a spunbonded nonwoven fabric according to claim 7, wherein the conjugate fiber of the step (a) is a polyester fiber.

**Patentansprüche**

1. Spinnvliesstoff, der thermoplastische Fasern umfasst, wobei die thermoplastische Faser eine konjugierte Faser ist, in der ein niedrigschmelzendes Polymer mit einem 10 bis 140 °C niedrigeren Schmelzpunkt als der eines hochschmelzenden Polymers um das hochschmelzende Polymer herum bereitgestellt ist, wobei der Spinnvliesstoff einen drucklosen Verbindungsabschnitt aufweist, sodass Fasern auf zumindest einer Oberfläche nicht thermisch verschmolzen sind, wobei der drucklose Verbindungsabschnitt eine Schüttdichte von 0,20 bis 0,60 g/cm$^3$ aufweist, wobei die Schüttdichte des drucklosen Verbindungsabschnitts anhand folgender Gleichung berechnet wird:

Schüttdichte (g/cm$^3$) des drucklosen Verbindungsabschnitts = [Grundewicht des Vliesstoffs (g/cm$^2$)]/[Dicke des Vliesstoffs (mm)] $\times$ 10$^{-3}$,

wobei das Grundgewicht und die Dicke des Vliesstoffs wie in der Beschreibung angegeben gemessen werden; und wobei, wenn die lange Achsenlänge eines Faserquerschnitts des drucklosen Verbindungsabschnitts a ist und seine kurze Achsenlänge b ist, die Faserflachheit a/b 1,5 bis 5 ist, und die Luftdurchlässigkeit [Formel 1] erfüllt:

[Luftdurchlässigkeit (cc/cm$^2$•s)] ≤ 520 x exp(-0,0236 x [Grundgewicht (g/m$^2$)] - 2,85 x [Schüttdichte (g/cm$^3$)]                [formel 1],

und wobei die Luftdurchlässigkeit wie in der Beschreibung angegeben gemessen wird;
und wobei der Spinnvliesstoff durch ein Herstellungsverfahren hergestellt ist, das die folgenden Schritte (a) bis (c) nacheinander in dieser Reihenfolge umfasst:

(a) Spinnen, mittels einer Spinndüse mit einer rechteckigen Ausgabeöffnung mit einem Aspektverhältnis (Länge der langen Seite/Länge der kurzen Seite) von 1,6 bis 8, einer konjugierten Faser, in der ein niedrigschmelzendes Polymer mit einem 10 bis 140 °C niedrigeren Schmelzpunkt als der eines hochschmelzenden Polymers um das hochschmelzende Polymer herum bereitgestellt ist;
(b) Verstrecken der gesponnenen konjugierten Fasern mittels eines Saugstroms unter Verwendung eines Hochgeschwindigkeitssauggases und Sammeln der Fasern auf einem sich bewegenden Netzförderer, um die gesammelten Fasern zu einem Vliesnetz zu formen; und
(c) teilweises Thermobonden des erhaltenen Vliesnetzes bei einer Temperatur 5 bis 80 °C unter dem Schmelzpunkt des niedrigschmelzenden Polymers.

2. Spinnvliesstoff nach Anspruch 1, wobei das Kompressionsverbindungsverhältnis des Spinnvliesstoffes 5 bis 40 % beträgt.

3. Spinnvliesstoff nach Anspruch 1 oder 2, wobei das Grundgewicht des Spinnvliesstoffs 10 bis 150 g/m$^2$ beträgt.

4. Spinnvliesstoff nach einem der Ansprüche 1 bis 3, wobei die Einzelfaserfeinheit der thermoplastischen Faser 0,5 bis 3 dtex beträgt.

5. Spinnvliesstoff nach einem der Ansprüche 1 bis 4, wobei die thermoplastische Faser eine Polyesterfaser ist.

6. Trennmembranträger, der einen Spinnvliesstoff nach einem der Ansprüche 1 bis 5 umfasst.

7. Herstellungsverfahren für einen Spinnvliesstoff nach einem der Ansprüche 1 bis 5, wobei das Verfahren die folgenden Schritte (a) bis (c) nacheinander in dieser Reihenfolge umfasst:

(a) Spinnen, mittels einer Spinndüse mit einer rechteckigen Ausgabeöffnung mit einem Aspektverhältnis (Länge der langen Seite/Länge der kurzen Seite) von 1,6 bis 8, einer konjugierten Faser, in der ein niedrigschmelzendes Polymer mit einem 10 bis 140 °C niedrigeren Schmelzpunkt als der eines hochschmelzenden Polymers um das hochschmelzende Polymer herum bereitgestellt ist;
(b) Verstrecken der gesponnenen konjugierten Fasern mittels eines Saugstroms unter Verwendung eines Hochgeschwindigkeitssauggases und Sammeln der Fasern auf einem sich bewegenden Netzförderer, um die gesammelten Fasern zu einem Vliesnetz zu formen; und
(c) teilweises Thermobonden des erhaltenen Vliesnetzes bei einer Temperatur 5 bis 80 °C unter dem Schmelzpunkt des niedrigschmelzenden Polymers.

8. Herstellungsverfahren für einen Spinnvliesstoff nach Anspruch 7, wobei die konjugierte Faser aus Schritt (a) eine Polyesterfaser ist.

**Revendications**

1. Tissu non tissé filé-lié comprenant des fibres thermoplastiques, dans lequel la fibre thermoplastique est une fibre conjuguée dans laquelle un polymère à bas point de fusion présentant un point de fusion inférieur de 10 à 140°C à celui d'un polymère à haut point de fusion est prévu autour du polymère à haut point de fusion, le tissu non tissé filé-lié présente une partie de liaison sans pression de telle sorte que des fibres sur au moins une surface ne sont pas fusionnées thermiquement, la partie de liaison sans pression présentant une densité apparente de 0,20 à 0,60 g/cm$^3$, dans lequel la densité apparente de la partie de liaison sans pression est calculée à partir de l'équation suivante :

   Densité apparente (g/cm$^3$) de partie de liaison sans pression = [poids de base du tissu non tissé (g/m$^2$)]/[épaisseur du tissu non tissé (mm)] $\times$ 10$^{-3}$,

   dans lequel le poids de base et l'épaisseur du tissu non tissé sont mesurés comme décrit dans la description ; et dans lequel lorsqu'une longueur d'axe long d'une section transversale de fibre de la partie de liaison sans pression est a et une longueur d'axe court de celle-ci est b, une planéité de fibre a/b est de 1,5 à 5, et une perméabilité à l'air satisfait [formule 1] :

   [perméabilité à l'air (cc/cm$^2$•sec) $\leq$ 520 x exp(-0,0236) x [poids de base (g/m$^2$)] - 2,85 x [densité apparente (g/cm$^3$)]]       [formule 1],

   et dans lequel la perméabilité à l'air est mesurée comme décrit dans la description ; et dans lequel le tissu non tissé filé-lié est produit par un procédé de production comprenant les étapes (a) à (c) suivantes successivement dans cet ordre :

   (a) filer, à partir d'une filière présentant un orifice de décharge rectangulaire présentant un rapport d'aspect (longueur de côté long/longueur de côté court) de 1,6 à 8, une fibre conjuguée dans laquelle un polymère à bas point de fusion présentant un point de fusion inférieur de 10 à 140°C à celui d'un polymère à haut point de fusion est prévu autour du polymère à haut point de fusion ;
   (b) étirer les fibres conjuguées filées par flux d'aspiration à l'aide d'un gaz d'aspiration à grande vitesse et collecter les fibres sur un transporteur à filet mobile pour former les fibres collectées en un voile non tissé ; et
   (c) lier partiellement thermiquement le voile non tissé obtenu à une température inférieure de 5 à 80°C au point de fusion du polymère à bas point de fusion.

2. Tissu non tissé filé-lié selon la revendication 1, dans lequel un rapport de liaison par compression du tissu non tissé filé-lié est de 5 à 40 %.

3. Tissu non tissé filé-lié selon la revendication 1 ou 2, dans lequel le poids de base du tissu non tissé filé-lié est de 10 à 150 g/m$^2$.

4. Tissu non tissé filé-lié selon l'une quelconque des revendications 1 à 3, dans lequel une finesse de fibre unique de la fibre thermoplastique est de 0,5 à 3 dtex.

5. Tissu non tissé filé-lié selon l'une quelconque des revendications 1 à 4, dans lequel la fibre thermoplastique est une fibre de polyester.

6. Support de membrane de séparation comprenant le tissu non tissé filé-lié selon l'une quelconque des revendications 1 à 5.

7. Procédé de production d'un tissu non tissé filé-lié selon l'une quelconque des revendications 1 à 5, le procédé comprenant les étapes (a) à (c) suivantes séquentiellement dans cet ordre :

   (a) filer, à partir d'une filière présentant un orifice de décharge rectangulaire présentant un rapport d'aspect (longueur de côté long/longueur de côté court) de 1,6 à 8, une fibre conjuguée dans laquelle un polymère à bas point de fusion présentant un point de fusion inférieur de 10 à 140°C à celui d'un polymère à haut point de fusion est prévu autour du polymère à haut point de fusion ;
   (b) étirer les fibres conjuguées filées par flux d'aspiration à l'aide d'un gaz d'aspiration à grande vitesse et collecter les fibres sur un transporteur à filet mobile pour former les fibres collectées en un voile non tissé ; et (c) lier partiellement thermiquement le voile non tissé obtenu à une température inférieure de 5 à 80°C au point de fusion du polymère à bas point de fusion.

8. Procédé de production d'un tissu non tissé filé-lié selon la revendication 7, dans lequel la fibre conjuguée de l'étape (a) est une fibre de polyester.

## REFERENCES CITED IN THE DESCRIPTION

**Patent documents cited in the description**

- JP 2013071106 A
- JP 2011005455 A
- JP 2004050274 A
- EP 2174703 A
- EP 2818229 A
- EP 3051014 A
- US 5498468 A